# EUROPÄISCHE PATENTANMELDUNG

(11) **EP 3 787 299 A1**
(43) Veröffentlichungstag der Anmeldung: **03.03.2021**
(21) Anmeldenummer: 19194998.1
(22) Anmeldetag: 02.09.2019
(51) Int. Cl.: H04N 21/434, H04N 21/462, H04N 21/472

(54) **AUFBAU EINER VERBINDUNG ZWISCHEN EINER ERSTEN ANWENDUNG AUF EINEM ERSTEN GERÄT UND EINER ZWEITEN ANWENDUNG AUF EINEM ZWEITEN GERÄT**

(71) Anmelder: Institut für Rundfunktechnik GmbH, 80939 München (DE)
(72) Erfinder: MERKEL, Klaus, 80939 München (DE); PROBST, Michael, 80797 München (DE); ZIEGLER, Christoph, 80799 München (DE)
(74) Vertreter: Koplin, Moritz

(57) **Zusammenfassung**

Gezeigt wird ein Verfahren, umfassend ein Aufbauen einer Verbindung zwischen einer ersten Anwendung auf einem ersten Gerät und einem Kommunikationsdienst auf dem ersten Gerät unter Verwendung einer Identifikation, die einer zweiten Anwendung zugeordnet ist, ein Aufbauen einer Verbindung zwischen der zweiten Anwendung, die auf einem zweiten Gerät ausgeführt wird, und dem Kommunikationsdienst unter Verwendung der Identifikation, ein Aufbauen eines Kommunikationskanals zwischen der ersten Anwendung und der zweiten Anwendung über den Kommunikationsdienst und ein Empfangen, durch die zweite Anwendung, einer ersten Nachricht von der ersten Anwendung, wobei die erste Nachricht eine dritte auf dem zweiten Gerät auszuführende Anwendung und/oder einen ersten auf dem zweiten Gerät auszuführenden Dienst der dritten Anwendung benennt.

## Beschreibung

### GEBIET

Die vorliegende Erfindung bezieht sich auf den Aufbau einer Verbindung zwischen Anwendungen auf unterschiedlichen Geräten. Insbesondere bezieht sich die vorliegende Erfindung auf den Aufbau einer Verbindung zwischen einer HbbTV-Anwendung auf einem HbbTV-Gerät und einer zweiten Anwendung auf einem Mobilgerät.

### HINTERGRUND

Version 2 der HbbTV-Spezifikation definiert einen Mechanismus, mit dem eine HbbTV-Anwendung ("App") anzeigefähige Geräte (bspw. Tablets, Mobiltelefone, etc.) im lokalen Netzwerk finden und auf den gefundenen Geräten Anwendungen starten kann. HbbTV-2 beschreibt allerdings nur die Schnittstelle, über die eine HbbTV-Anwendung das Suchen nach Geräten ("Discovery") und das Starten von Anwendungen ("Launch") auslösen kann. Daher kommen zur Kommunikation zwischen dem anzeigefähigen Gerät ("Second Screen") und dem HbbTV-Gerät typischerweise herstellerspezifische Protokolle zum Einsatz.

### DARSTELLUNG DER ERFINDUNG

Der HbbTV 2 Standard sieht vor, dass HbbTV-Geräte-Hersteller Anwendungen bereitstellen, die auf dem HbbTV-Gerät und dem jeweiligen anzeigefähigen Gerät die Endpunkte eines herstellerspezifischen Protokolls implementieren. Solche Herstellerspezifischen Launcher-Anwendungen gemäß HbbTV-Standard haben folgende Schwächen:
1. Es sind nicht alle Hersteller dazu verpflichtet, eine "Launcher"-Anwendung für ihre HbbTV-Geräte anzubieten. Dies kann sich negativ auf die Reichweite entsprechender Dienste auswirken.
2. Es gibt keine verbindlichen Guidelines für die Nutzerführung von "Launcher"-Anwendungen bezüglich Installation und bestimmungsgemäßen Gebrauch. "Launcher"-Anwendungen verschiedener Hersteller werden sich daher in diesen Punkten unterscheiden. Anbieter von "Second Screen"-Anwendungen stellt dies vor die Herausforderung, ihren Anwendern zu vermitteln, welche auf dem anzeigefähigen Gerät auszuführende "Launcher"-Anwendung für das HbbTV-Gerät passend ist, wo sich die Anwender diese beschaffen können und wie sie diese korrekt verwenden.

Die vorliegende Erfindung überwindet diese und weitere Probleme, der aus dem Stand der Technik bekannten Verfahren zum Aufbau einer Verbindung zwischen Anwendungen auf unterschiedlichen Geräten. Dabei ist die vorliegende Erfindung nicht auf HbbTV beschränkt, sondern kann ganz allgemein zum Aufbau einer Verbindung zwischen Anwendungen auf unterschiedlichen Geräten verwendet werden.

Ein erfindungsgemäßes Verfahren umfasst ein Aufbauen einer Verbindung zwischen einer ersten Anwendung auf einem ersten Gerät und einem Kommunikationsdienst auf dem ersten Gerät unter Verwendung einer Identifikation, die einer zweiten Anwendung zugeordnet ist, ein Aufbauen einer Verbindung zwischen der zweiten Anwendung, die auf einem zweiten Gerät ausgeführt wird, und dem Kommunikationsdienst unter Verwendung der Identifikation, ein Aufbauen eines Kommunikationskanals zwischen der ersten Anwendung und der zweiten Anwendung über den Kommunikationsdienst und ein Empfangen, durch die zweite Anwendung, einer ersten Nachricht von der ersten Anwendung, wobei die erste Nachricht eine dritte auf dem zweiten Gerät auszuführende Anwendung und/oder einen ersten auf dem zweiten Gerät auszuführenden Dienst der dritten Anwendung benennt.

Dabei ist unter der Formulierung "Aufbauen einer Verbindung", wie sie im Rahmen der vorliegenden Beschreibung und der Ansprüche verwendet wird, insbesondere das Senden und Empfangen von Nachrichten zu verstehen, mittels derer Nutzdaten von einer Anwendung auf einem Gerät zu einer Anwendung auf einem anderen Gerät übertragen werden können. Ferner ist unter dem Begriff "Anwendung", wie er im Rahmen der vorliegenden Beschreibung und der Ansprüche verwendet wird, insbesondere ein Software-Programm zu verstehen, das einem Gerät bisher nicht verfügbare Dienste hinzufügt und dadurch die Verwendungsmöglichkeit des Geräts erweitert. Das Software-Programm kann bspw. speziell zur Ausführung auf dem Betriebssystem des Endgeräts konzipiert sein (z. B. eine "native" Android- oder iOS-Anwendung). Das Software-Programm kann aber auch so konzipiert sein, dass es von anderen Anwendungen interpretiert und ausgeführt wird (z. B. eine Webseite, die HTML-, CSS- und/oder JavaScript-Code enthält und durch einen Webbrowser oder eine Anwendung, die einen Webbrowser enthält, ausgeführt wird).

Unter dem Begriff "Gerät", wie er im Rahmen der vorliegenden Beschreibung und der Ansprüche verwendet wird, ist in diesem Zusammenhang insbesondere eine Verschaltung elektrischer und elektronischer Komponenten in einer funktionalen Einheit zu verstehen, wobei die elektrischen und elektronischen Komponenten mit einer komponentennahen Softwareschicht versehen sein können, die das Installieren eines Betriebssystems auf unterschiedlichen Geräten ermöglicht.

Zudem ist unter dem Begriff "Kommunikationsdienst", wie er im Rahmen der vorliegenden Beschreibung und der Ansprüche verwendet wird, insbesondere ein durch eine Softwareschicht auf dem Gerät bereitgestellter Dienst zu verstehen, der dazu beiträgt, eine Übertragung von Nachrichten von einem Gerät zum anderen Gerät zu ermöglichen. In diesem Zusammenhang ist unter dem Begriff "Kommunikationskanal", wie er im Rahmen der vorliegenden Beschreibung und der Ansprüche verwendet wird, insbesondere eine Übertragungsstrecke zu verstehen, über die Nachrichten von einer Anwendung auf einem Gerät zu einer Anwendung auf einem anderen Gerät übertragen werden können. Ferner ist unter dem Begriff "Identifikation", wie er im Rahmen der vorliegenden Beschreibung und der Ansprüche verwendet wird, insbesondere eine digital wiedergebbare Information zu verstehen, mit mittels der eine eindeutige Zuordnung von Entitäten möglich ist (z.B. ein Typ einer Anwendung oder eine Instanz einer Anwendung).

Vorzugsweise ist das erste Gerät zur Wiedergabe von Bild- und Tondaten ausgebildet. Bspw. kann das erste Gerät als Fernsehgerät ausgebildet sein.

Vorzugsweise ist das erste Gerät als HbbTV-fähiges Empfangsgerät ausgebildet. Bspw. kann das erste Gerät als HbbTV-fähiges Fernsehgerät ausgebildet sein.

Vorzugsweise ist die erste Anwendung auf dem ersten Gerät einem ersten Rundfunkkanal zugeordnet und wird automatisch gestartet oder kann manuell gestartet werden, wenn das erste Gerät Bild- und Tondaten des ersten Rundfunkkanals wiedergibt. Bspw. kann die erste Anwendung durch eine Rundfunksendeanstalt herausgegeben werden und Informationen und Dienste rund um einen Rundfunkkanal der Rundfunksendeanstalt und/oder interaktive Elemente zum Rundfunkkanal bereitstellen.

Vorzugsweise überprüft die zweite Anwendung, ob die erste Anwendung autorisiert ist, die Ausführung der dritten Anwendung und/oder des ersten Dienstes anzustoßen, und veranlasst eine Ausführung der dritten Anwendung und/oder des ersten Dienstes, wenn die erste Anwendung autorisiert ist, die Ausführung der dritten Anwendung und/oder des ersten Dienstes anzustoßen.

Vorzugsweise umfasst das Verfahren ferner ein Beenden der ersten Anwendung und Ausführen einer vierten Anwendung auf dem ersten Gerät, ein Aufbauen eines Kommunikationskanals zwischen der vierten Anwendung und der zweiten Anwendung über den Kommunikationsdienst unter Verwendung der Identifikation und ein Empfangen, durch die zweite Anwendung, einer zweiten Nachricht von der vierten Anwendung, wobei die zweite Nachricht eine fünfte auf dem zweiten Gerät auszuführende Anwendung und/oder einen zweiten auf dem zweiten Gerät auszuführenden Dienst der fünften Anwendung benennt.

Das Beenden der ersten Anwendung und das Ausführen der vierten Anwendung auf dem ersten Gerät kann bspw. aus einem Umschalten zwischen einem ersten und einem zweiten Rundfunkkanal resultieren und dazu führen, dass auf dem zweiten Gerät andere Anwendungen und/oder Dienste gestartet werden, um dem Umschaltvorgang und der damit einhergehenden Verschiebung der Aufmerksamkeit des Anwenders auf den zweiten Rundfunkkanal Rechnung zu tragen.

Das Verfahren kann ferner ein Verbreiten einer dritten Nachricht durch die auf dem zweiten Gerät ausgeführte zweite Anwendung und ein Beantworten der dritten Nachricht durch das erste Gerät umfassen, wobei die Antwort die Adresse des Kommunikationsdienstes auf dem ersten Gerät umfasst.

D. h., die zweite Anwendung kann in einem Netzwerk nach dem ersten Gerät suchen, wobei die Suche dann abgeschlossen ist, wenn das erste Gerät mit der Adresse des Kommunikationsdienstes auf dem ersten Gerät antwortet.

Die auf dem zweiten Gerät ausgeführte zweite Anwendung kann eingerichtet sein, einen Aufbauversuch hinsichtlich des Kommunikationskanal solange zu wiederholen, bis der Kommunikationskanal aufgebaut ist.

Der Kommunikationskanal zwischen der ersten und der zweiten Anwendung kann unter beidseitiger Verwendung einer Identifikation, die eine Instanz der zweiten Anwendung auf dem zweiten Gerät identifiziert, aufgebaut werden. Somit können identische Anwendungen, die auf unterschiedlichen Geräten ausgeführt werden, unterschieden und dadurch gezielt angesprochen werden.

Die Identifikation kann auf dem ersten Gerät durch die erste Anwendung persistent gespeichert werden und ein Zugriff auf die gespeicherte Identifikation kann auf Anwendungen begrenzt sein, die aus derselben Quelle (z. B. dem gleichen Web-Origin) wie die erste Anwendung stammen.

Bspw. kann der Zugriff auf die gespeicherte Identifikation auf Anwendungen begrenzt sein, die von derselben Rundfunkanstalt herausgegeben bzw. unter derselben Internetadresse bereitgestellt werden.

Die zweite Anwendung kann die Identifikation an die erste Anwendung übertragen, die diese auf dem ersten Gerät persistent speichert.

Die Identifikation kann einer auf dem ersten Gerät ausgeführten fünften Anwendung, die aus einer anderen Quelle als die erste Anwendung stammt, bereitgestellt und von der fünften Anwendung auf dem ersten Gerät persistent gespeichert werden.

D. h., Identifikationen können, wenn gewünscht, von Anwendungen an andere Anwendungen weitergegeben werden, wodurch diese den Prozess des Suchens und Ermittelns von geeigneten Geräten/Anwendungen nicht durchlaufen müssen.

Die erste Anwendung kann eingerichtet sein, der fünften Anwendung die Identifikation weiterzuleiten und die fünfte Anwendung kann eingerichtet sein, die zweite Identifikation persistent auf dem ersten Gerät zu speichern.

Die zweite Anwendung kann die Identifikation und Quellen autorisierter Anwendungen an eine sechste Anwendung auf dem ersten Gerät übertragen, welche autorisierte Anwendungen ausführt und mit der Identifikation versorgt, wobei die autorisierten Anwendungen die Identifikation auf dem ersten Gerät speichern und ihrer Quelle zuordnen.

Die Identifikation kann von einer Anwendung auf dem ersten Gerät aus einer Benutzereingabe abgeleitet und persistent gespeichert werden.

Die erste Anwendung auf dem ersten Gerät kann der zweiten Anwendung auf dem zweiten Gerät mittels der Identifikation über einen externen Kommunikationsdienst eine vierte Nachricht senden, die die dritte Anwendung und/oder den ersten Dienst, der durch die dritte Anwendung bereitgestellt wird, identifiziert.

Die erste Anwendung auf dem ersten Gerät kann der zweiten Anwendung auf dem zweiten Gerät über einen externen Kommunikationsdienst unter Verwendung der Identifikation eine fünfte Nachricht senden, welche die zweite Anwendung dazu anregt, die Verbindung zwischen der zweiten Anwendung und dem Kommunikationsdienst aufzubauen.

Die dritte auf dem zweiten Gerät auszuführende Anwendung und/oder der erste auf dem zweiten Gerät auszuführende Dienst kann in Reaktion auf die erste Nachricht oder in Reaktion auf eine Bestätigungseingabe sofort oder zu einem späteren Zeitpunkt ausgeführt werden.

Vorzugsweise stellt die dritte Anwendung eine mit der Wiedergabe auf dem ersten Gerät koordinierte Benutzerschnittstelle bereit, wobei die Koordination mittels eines zwischen der ersten Anwendung und der dritten Anwendung aufgebauten Kommunikationskanals erfolgt.

Dabei versteht es sich, dass die im Rahmen des Verfahrens ausgeführten Schritte durch persistent auf einem Gerät gespeicherte Anweisungen ausgeführt werden können, durch die das Gerät eingerichtet wird, die Schritte durchzuführen.

### KURZE BESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1a ein erstes beispielhaftes System mit einem ersten Gerät und einem zweiten Gerät zeigt;
Fig. 1b ein zweites beispielhaftes System mit einem ersten Gerät und einem zweiten Gerät zeigt;
Fig. 1c ein drittes beispielhaftes System mit einem ersten Gerät und einem zweiten Gerät zeigt;
Fig. 1d ein viertes beispielhaftes System mit einem ersten Gerät und einem zweiten Gerät zeigt;
Fig. 1e ein fünftes beispielhaftes System mit einem ersten Gerät und einem zweiten Gerät zeigt;
Fig. 2 einen Prozess zum Aufbauen eines Kommunikationskanals zwischen einer ersten Anwendung auf dem ersten Gerät und einer zweiten Anwendung auf dem zweiten Gerät der in Fig. 1a, Fig. 1b, Fig. 1c und in Fig. 1d gezeigten Systeme zeigt;
Fig. 3 eine Modifikation des in Fig. 2 gezeigten Prozesses zeigt, bei dem neben der zweiten Anwendung auf dem zweiten Gerät eine weitere Anwendung auf einem dritten Gerät ihre Verbindungsbereitschaft signalisiert;
Fig. 4 weitere Schritte des in Fig. 2 gezeigten Prozesses zeigt, in denen überprüft wird, ob die erste Anwendung zum Starten der dritten Anwendung bzw. des ersten Dienstes autorisiert ist;
Fig. 5 weitere Schritte des in Fig. 4 gezeigten Prozesses zeigt, in denen die zweite Anwendung den Kommunikationsdienst sucht (und findet); und
Fig. 6 eine weitere Modifikation des in Fig. 2 gezeigten Prozesses zeigt, in der die zweite Anwendung solange versucht, einen Kommunikationskanal aufzubauen, bis der Kommunikationsdienst antwortet.

Dabei sind in den Zeichnungen gleiche oder funktional ähnliche Elemente durch gleiche Bezugszeichen gekennzeichnet.

### WEGE ZUR AUSFÜHRUNG DER ERFINDUNG

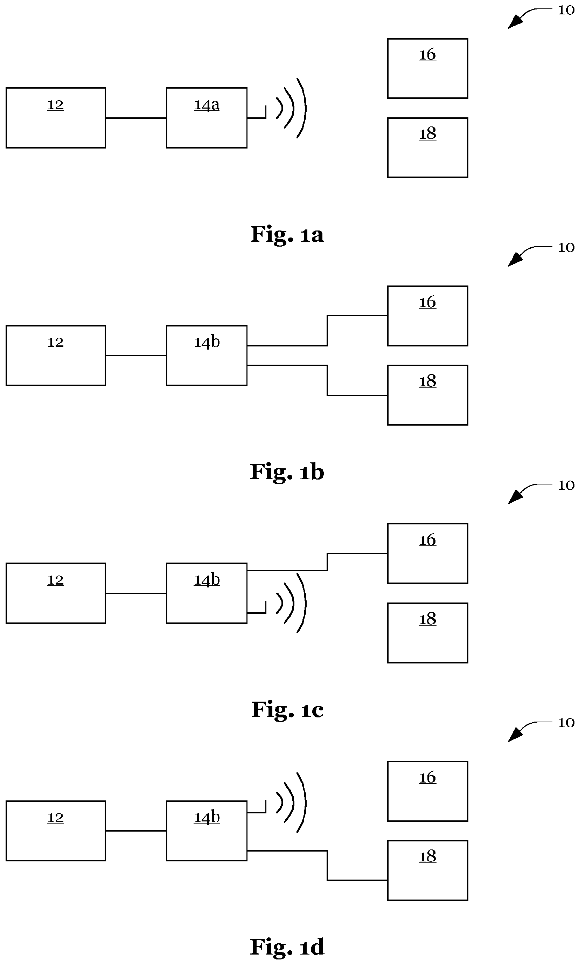

Fig. 1a zeigt ein erstes System 10, umfassend ein erstes Gerät 12, das über eine interne oder externe Funkeinheit 14a mit einem zweiten Gerät 16 und einem dritten Gerät 18 Daten austauschen kann. Das erste Gerät 12 kann zur Wiedergabe von Bild- und/oder Tondaten eingerichtet sein. Bspw. kann das erste Gerät 12 ein Fernsehgerät sein (z. B. ein HbbTV-fähiges Fernsehgerät), das eingerichtet ist, einen oder mehrere Rundfunkkanäle über eine Funk- oder Kabelschnittstelle zu empfangen und die in einem ausgewählten Rundfunkkanal enthaltenen Bild- und/oder Tondaten (auf einem Bildschirm bzw. mittels eines oder mehrerer Lautsprecher) wiederzugeben. Das zweite Gerät 16 und das dritte Gerät 18 können als Mobilgeräte (bspw. als Tablet, Mobiltelefon, etc.) ausgebildet sein und ebenfalls zur Wiedergabe von Bild- und/oder Tondaten (auf einem Bildschirm und mittels eines oder mehrerer Lautsprecher) eingerichtet sein. Die Geräte 12, 16, 18 können Knoten eines Netzwerks sein (bspw. eines Heimnetzwerks, das von einem WLAN-fähigen Router 14a aufgespannt wird) und im Netzwerk über Adressen ansprechbar sein.

Fig. 1b zeigt ein zweites System 10, das sich von dem in Fig. 1a gezeigten System 10 dadurch unterscheidet, dass das zweite Gerät 16 und das dritte Gerät 18 nicht über eine Funkstrecke sondern über eine drahtgebundene Übertragungsstrecke (bspw. über einen Router 14b und eine Ethernet-Verbindung) mit dem ersten Gerät 12 verbunden sind. Fig. 1c zeigt ein drittes System 10, das sich von dem in Fig. 1a gezeigten System 10 dadurch unterscheidet, dass das zweite Gerät 16 nicht über eine Funkstrecke sondern über eine drahtgebundene Übertragungsstrecke (bspw. über einen Router 14b und eine Ethernet-Verbindung) mit dem ersten Gerät 12 verbunden ist. Fig. 1d zeigt ein viertes System 10, das sich von dem in Fig. 1a gezeigten System 10 dadurch unterscheidet, dass das dritte Gerät 18 nicht über eine Funkstrecke sondern über eine drahtgebundene Übertragungsstrecke (bspw. über einen Router 14b und eine Ethernet-Verbindung) mit dem ersten Gerät 12 verbunden ist.

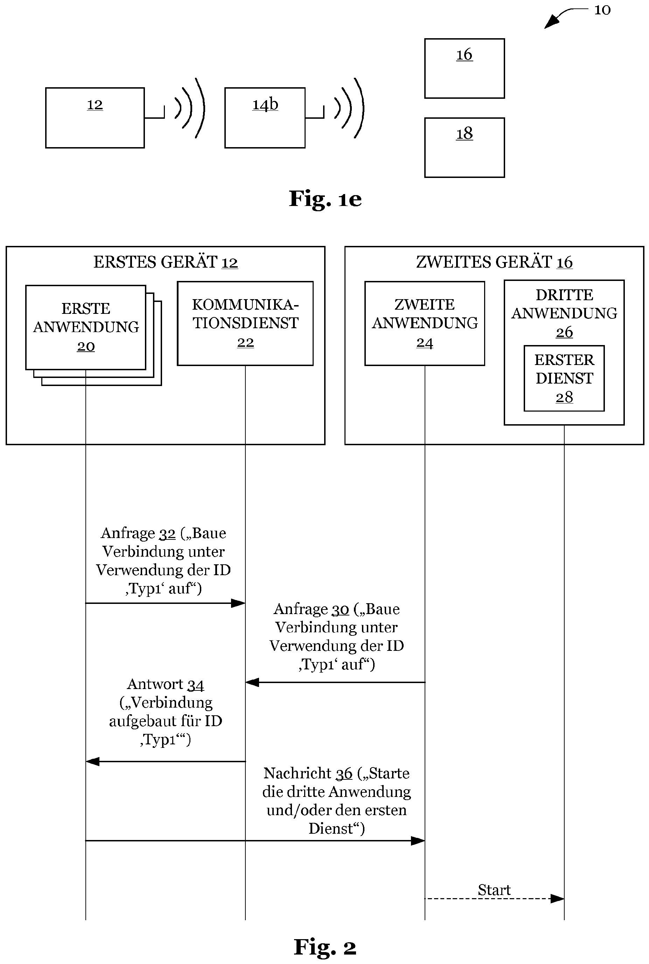

Fig. 1e zeigt ein fünftes System 10, das sich von den in Fig. 1b-Fig. 1d gezeigten Systemen 10 dadurch unterscheidet, dass das erste Gerät 12 über Funk mit dem Router 14b verbunden ist und der Router 14b ebenfalls über Funk mit dem zweiten Gerät 16 und dem dritten Gerät 18 verbunden ist. Dabei kann das zweite Gerät 16 und/oder das dritte Gerät 18 natürlich auch über eine drahtgebundene Übertragungsstrecke mit dem Router 14b verbunden sein.

Fig. 2 zeigt einen Prozess zum Aufbauen eines Kommunikationskanals zwischen dem ersten Gerät 12 und dem zweiten Gerät 16. Dabei wird angenommen, dass die Identifikation, ID, der ersten Anwendung 20 bspw. in Form einer Typ-Kennung "Typ1" zur Verfügung steht (z. B. "Name einer Launcher-App-Implementierung"). Die in Fig. 2 gezeigte Sitzung beginnt damit, dass die erste Anwendung 20 (bspw. eine HbbTV-Anwendung) eine Verbindung zu einem Kommunikationsdienst 22 (bspw. einem APP2APP-Local-Endpunkt) aufmacht (wobei sie bspw. an den entsprechenden URL die ID anhängt).

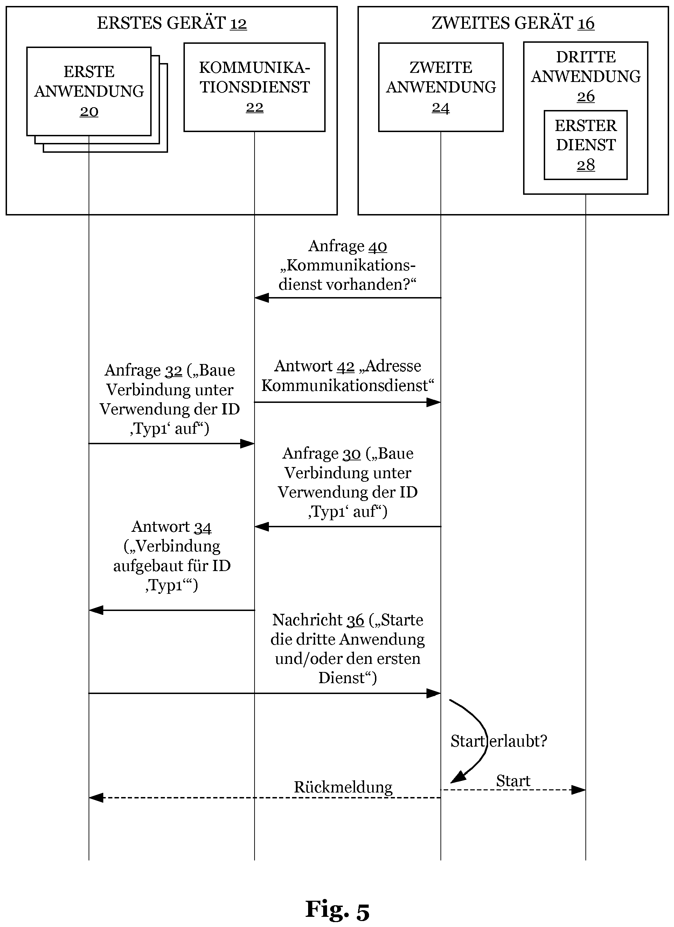

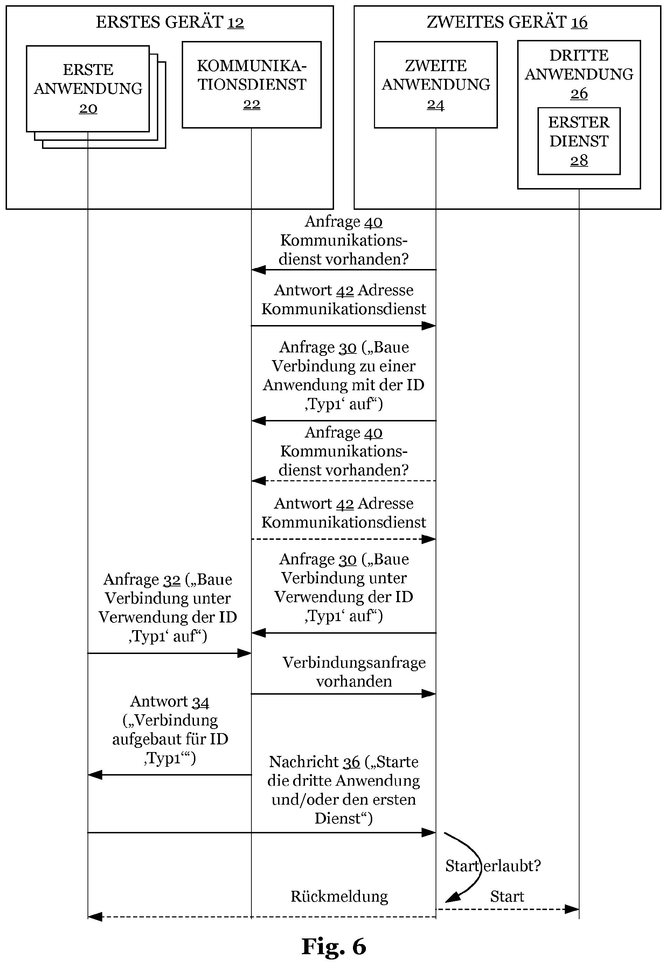

Wie in Fig. 5 und in Fig. 6 gezeigt, können der in Fig. 2 gezeigten Sequenz schon Versuche der zweiten Anwendung 24 vorausgegangen sein, den Kommunikationsdienst 22 (bzw. den APP2APP-Remote-Endpunkt) zu finden und sich mit diesem zu verbinden. Bspw. kann die zweite Anwendung 24 eine Kommunikationsdiensterkennungs-Routine durchführen (bspw. mittels der in HbbTV-2 beschrieben "Discovery"-Routine), durch die sie den Kommunikationsdienst 22 findet (bspw. den APP2APP-Remote-Endpunkt). Der Kommunikationsdienst 22 kann dabei immer oder auch nur solange verfügbar sein, wie die erste Anwendung 20 die Verbindung zum Kommunikationsdienst 22 geöffnet hält. Bspw. kann eine APP2APP-Remote-URL eines APP2APP-Remote-Endpunkts gemäß der HbbTV-2-Spezifikation nur nach dem Öffnen durch eine HbbTV-Anwendung und nur solange erreichbar sein, bis die HbbTV-Anwendung die Verbindung zum Kommunikationsdienst 22 schließt. Verbindungsversuche können somit scheitern, weil sich keine Anwendung mit der entsprechenden Gegenstelle (bzw. dem APP2APP-Local-Endpunkt) verbunden hat. Möglich ist auch, dass eine zuvor bestehende Verbindung unterbrochen wurde, weil eine Anwendung, zu der eine Verbindung bestand, beendet wurde.

Nachdem die zweite Anwendung 24 den Kommunikationsdienst 22 (bzw. den APP2APP-Remote-Endpunkt) gefunden hat, kann sie zu diesem, wie in Fig. 2 illustriert, eine Verbindung aufbauen, wobei sie bspw. die ID (die der zweiten Anwendung zugeordnet ist) an den APP2APP-Remote-URL anhängt und eine entsprechende Anfrage 30 an den Kommunikationsdienst 22 sendet. Stimmen die von der ersten Anwendung 20 in der Anfrage 32 und der zweiten Anwendung in der Anfrage 30 angegebenen IDs überein, stellt der Kommunikationsdienst 22 auf dem ersten Gerät 12 eine Verbindung zwischen beiden Anwendungen 20, 24 her. Der Kommunikationsdienst 22 kann die erste Anwendung 20 und/oder die zweite Anwendung 24 über den Aufbau der Verbindung mittels einer Nachricht 34 ("pairingcompleted") in Kenntnis setzen. Die erste Anwendung 20 kann nun über den Kommunikationsdienst 22 bei der zweiten Anwendung 24 den Start einer dritten Anwendung 26 und/oder eines ersten Dienstes 28 auf dem zweiten Gerät 16 (bspw. einem "Second Screen") mit einer entsprechenden Nachricht 36 anfordern.

Die zweite Anwendung 24 kann dazu eingerichtet sein, es Anwendungen 20 (bspw. verschiedenen HbbTV-Anwendungen) verschiedener Anbieter oder Anwendungen 20 aus verschiedenen Quellen auf dem ersten Gerät 12 zu ermöglichen, Anwendungen/Dienste auf dem zweiten Gerät 16 zu starten. Damit sich eine Anwendung 20 auf dem ersten Gerät 12 mit der zweiten Anwendung 24 verbinden kann, benötigt die jeweilige Anwendung 20 die Kenntnis einer ID, die bspw. eine Typ- und/oder Instanz-Kennung der zweiten Anwendung 24 sein kann. Dabei kann vorgesehen sein, dass die von einer bestimmten Anwendung 20 auf dem ersten Gerät 12 gespeicherte ID nur von Anwendungen 20, die aus der gleichen Quelle stammen (bzw. von der gleichen Quelle heruntergeladen wurden), gelesen werden kann. Eine Quelle kann in diesem Zusammenhang bspw. durch ein Kommunikationsprotokoll (z. B. http oder https), einen Host (z. B. www.irt.de) und einen Port (z. B. 80) definiert sein, über die die Anwendung heruntergeladen werden kann, wobei Anwendungen 20 unterschiedlicher Herausgeber in der Regel aus unterschiedlichen Quellen bezogen werden. Allerdings kann ein Herausgeber Anwendungen 20 auch über verschiedene Quellen anbieten.

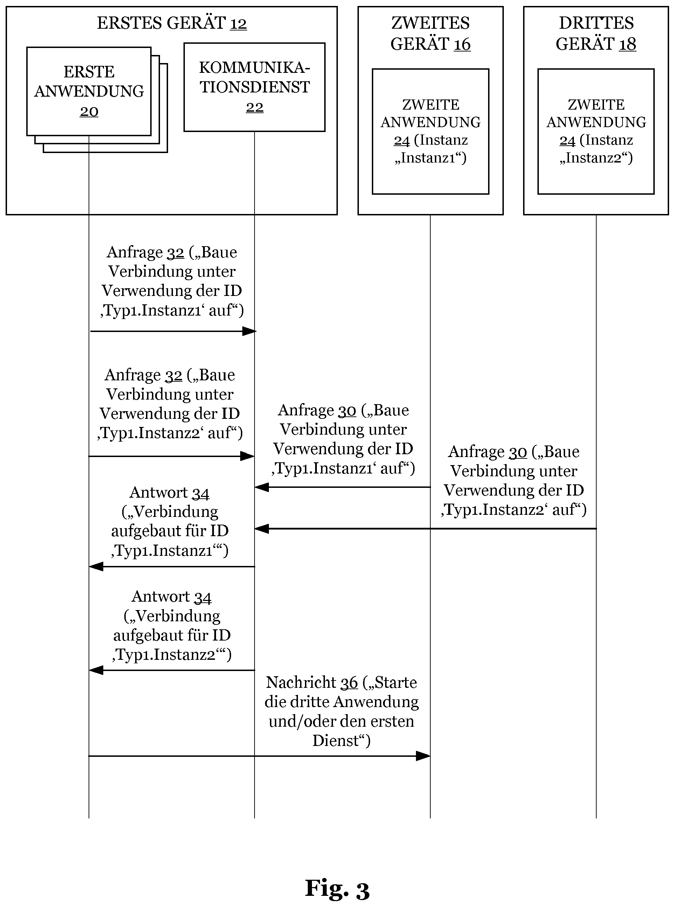

Anwendungen 24 des gleichen Typs, die auf unterschiedlichen Geräten (bspw. dem zweiten Gerät 16 und dem dritten Gerät 18) ausgeführt werden, können, wie in Fig. 3 illustriert, dadurch unterschieden werden, dass sie beim Tätigen der Anfrage 30 (explizit oder implizit) die ID übertragen, mit der sich die Instanzen unterscheiden lassen). Die ID kann im Rahmen einer Einrichtungsroutine an eine oder mehrere erste Anwendungen 20 (aus verschiedenen Quellen) auf dem ersten Gerät 12 übertragen werden. Die eine bzw. die mehreren Anwendungen 20 können die ID auf dem ersten Gerät 12 persistent speichern. Die Einrichtungsroutine kann so ausgestaltet sein, dass der Anwender festlegen kann, welche Anwendungen 20 (oder welche Anwendungen 20 aus welchen Quellen) sich später mit einer Anwendung 24 eines bestimmten Typs verbinden dürfen.

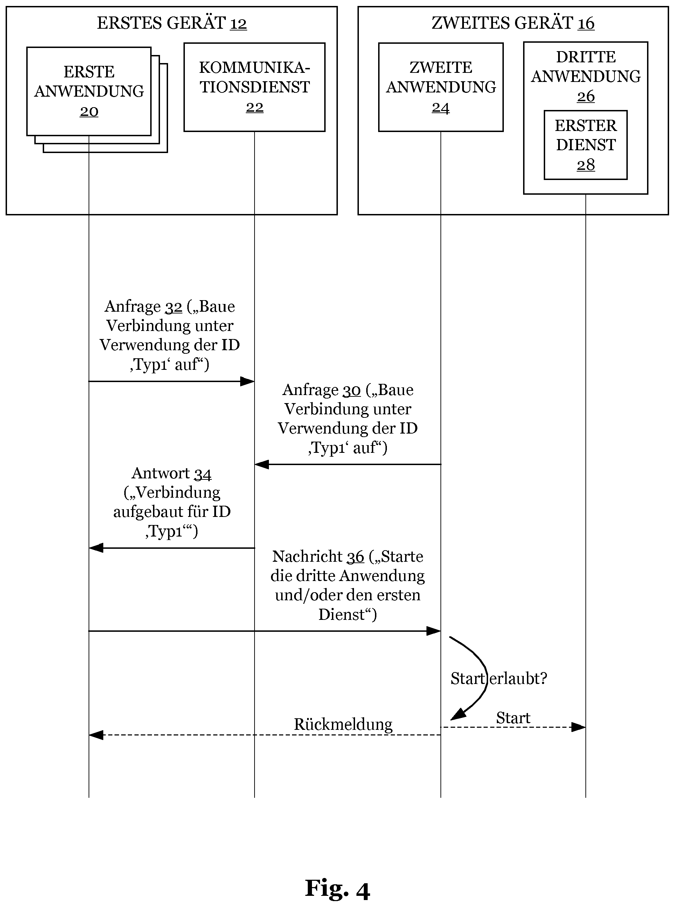

Die erste Anwendung 20 kann, wie in Fig. 4 illustriert, der Nachricht 36 hinsichtlich der zu startenden dritten Anwendung 26 bzw. des zu startenden ersten Dienstes 28 eine Information (bspw. den Anwendungs-Typ der ersten Anwendung 20) hinzufügen, die die erste Anwendung 20 identifiziert. Anhand der Information kann die zweite Anwendung 24 prüfen, ob die erste Anwendung 20 allgemein zum Start jeglicher Anwendungen/Dienste oder speziell zum Starten der dritten Anwendung 26 und/oder des zweiten Dienstes 28 autorisiert ist. Bspw. kann die zweite Anwendung 24 die Information mit einer "Blacklist" (Liste mit Anwendungen/Diensten, bei denen der Start verboten ist) oder "Whitelist" (Liste mit Anwendungen/Diensten, denen der Start erlaubt ist) abgleichen.

Taucht die erste Anwendung 20 in keiner Liste auf, kann die zweite Anwendung 24 den Anwender auffordern anzugeben, ob er diesem (und zukünftigen) Anwendungs- und/oder Dienststarts durch die erste Anwendung 20 zustimmt. Ist die erste Anwendung 20 zum Starten der jeweiligen Anwendung und/oder des jeweiligen Dienstes autorisiert, so kann die zweite Anwendung 24 dies der ersten Anwendung 20 mitteilen und anschließend versuchen, die angeforderte Anwendung bzw. den angeforderten Dienst zu starten. Ist die erste Anwendung 20 dazu nicht autorisiert, so kann die zweite Anwendung 24 dies ebenfalls der ersten Anwendung 20 mitteilen. Die zweite Anwendung 24 kann hierbei Details zur Begründung liefern, z.B. dass die erste Anwendung 20 auf einer "Blacklist" steht. Dies ermöglicht der ersten Anwendung 20 dem Anwender entsprechende Hinweise anzuzeigen.

Im HbbTV-Bereich bietet die beschriebene Lösung eine Alternative zu den in HbbTV-2 spezifizierten herstellerspezifischen "Launcher"-Anwendungen. Sie erlaubt, TV-Dienste-übergreifend, den "Launch" von Anwendungen/Diensten auf "Second Screens" und kommt dabei ohne zusätzlichen Web-Server aus. Letzteres hat den Vorteil, dass die Betriebskosten nicht mit der Nutzerzahl steigen. Zudem müssen, bis auf die ID auf dem ersten Gerät 12 keine Daten außerhalb der zweiten Anwendung 24 gespeichert werden. Ein Nutzerprofil, das zum Beispiel eine Historie von gestarteten Anwendungen/Diensten und eine vom Nutzer gepflegte Favoritenliste mit Anwendungen/Diensten enthält, kann in der zweiten Anwendung 24 auf dem zweiten Gerät 16 hinterlegt sein. So hat der Nutzer volle und alleinige Hoheit über seine Daten und kann sie als einziger lesen, löschen und ändern.

Um zu verhindern, dass der Anwender die ID für jede Anwendung 20 (die sich mit der zweiten Anwendung 24 verbinden können soll) einzeln eingeben muss, kann eine Liste dieser Anwendungen 20 in der zweiten Anwendung 24 hinterlegt sein und die zweite Anwendung 24 eingerichtet sein, die Anwendungen 20 auf dem ersten Gerät 12 nacheinander anzusprechen und ihnen dabei die ID mitzuteilen.

Dazu können im Falle von HbbTV-Anwendungen bspw. die Discovery- und Launch-Protokolle aus HbbTV-2 verwendet werden. Z. B. kann die zweite Anwendung 24 die ID über den Kommunikationsdienst oder bereits als Parameter in der Start-URL an die Anwendungen 20 auf dem ersten Gerät 12 übertragen, die diese auf dem ersten Gerät 12 (z. B. in einem Cookie) persistent speichern können. Die ID steht dann für spätere Verbindungen zur Verfügung. Die Liste der Anwendungen 20 auf dem ersten Gerät 12, die die ID (möglicherweise) benötigen, kann bei "Updates" der zweiten Anwendung 24 aktualisiert werden. Nach der Aktualisierung kann ein erneutes Setup (mit einem sequenziellen Ansprechen der Anwendungen 20 auf dem ersten Gerät 12) durchgeführt werden.

Bspw. kann die zweite Anwendung 24 eine Anwendung 20 aus einer bestimmten Quelle auf dem ersten Gerät 12 starten (in einer HbbTV-Umgebung z. B. über das DIAL-Protokoll aus der HbbTV-Spezifikation) und dabei die ID übertragen. Die Anwendung 20 aus der Quelle kann die ID speichern und an eine Anwendung 20 aus einer weiteren Quelle weiterleiten. Die Anwendung 20 aus der weiteren Quelle kann die ID ebenfalls speichern und ihrerseits an eine Anwendung 20 aus einer weiteren Quelle weiterleiten, usw.

Wohin die Anwendungen 20 die ID weiterleiten sollen, kann auf unterschiedliche Weisen definiert sein. Bspw. kann einer Anwendung 20 aus einer bestimmten Quelle eine Liste weiterer Anwendungen 20 bereitgestellt werden, an die die ID weitergeleitet werden soll und die Liste bei der Weiterleitung zusammen mit der ID an die erste Anwendung 20 auf der Liste übergeben. Die erste Anwendung 20 auf der Liste kann dann von der Liste entfernt und die Liste zusammen mit der ID an die nächste Anwendung 20 auf der Liste übergeben werden, usw.

Ferner kann die erste Anwendung 20 eine Verbindung zu der zweiten Anwendung 24 aufbauen und der zweiten Anwendung 24 mitteilen, dass sie die ID gespeichert hat. Anschließend kann die zweite Anwendung 24 einen Befehl an die erste Anwendung 20 senden, die ID an eine weitere Anwendung 20 aus einer anderen Quelle weiterzuleiten, die dann eine Verbindung zur zweiten Anwendung 24 aufbaut, usw.

Ferner kann die zweite Anwendung 24 (bspw. in einer HbbTV-Umgebung mittels des DIAL-Protokolls aus der HbbTV-2-Spezifikation) nacheinander alle Anwendungen 20 der autorisierten Quellen starten und dabei jeweils die ID übertragen.

Des Weiteren kann die zweite Anwendung 24 eine Anwendung auf dem ersten Gerät 12 starten und dabei die URLs aller Anwendungen 20 autorisierter Quellen übertragen. Die gestartete Anwendung kann dann die Anwendungen 20 der autorisierten Quellen als Inlineframes einbinden und die ID an die Anwendungen 20 in den Inlineframes übergeben. Die ID kann bspw. per URL-Parameter an die Adressen der Anwendungen 20 aus autorisierten Quellen übergeben werden. Ferner kann die ID mittels des W3C Web-Messaging-APIs zwischen der gestarteten Anwendung und den autorisierten Anwendungen 20 durch Einbettung in Inlineframes transportiert werden.

Zudem kann ein Webservice verwendet werden. Möchte eine Anwendung 20 auf dem ersten Gerät 12 sich mit der zweiten Anwendung 24 verbinden und liegt die ID nicht vor, kann die Anwendung 20 eine Weiterleitung auf die Anwendung des Webservices einrichten. Steht der Anwendung des Webservices die ID nicht zur Verfügung, kann sie den Anwender auffordern, die ID einzugeben. Hat der Anwender die ID eingegeben, kann die Anwendung des Webservices diese auf dem ersten Gerät 12 speichern. Anschließend kann die Anwendung des Webservices eine Umleitung auf die Anwendung 20 auf dem ersten Gerät 12 einrichten und dabei die ID übermitteln. Die Anwendung 20 auf dem ersten Gerät 12 kann die ID auf dem ersten Gerät 12 speichern. Über eine Weiterleitung auf die Anwendung des Webservices kann die ID somit allen Anwendungen 20 auf dem ersten Gerät 12 zur Verfügung gestellt werden.

Auf zweiten Geräten 16 mit Android und iOS Betriebssystem kann der Webservice zudem als zentrales Gateway zu Googles "Firebase-Cloud-Messaging"-Service dienen (andere Plattformen für zweite Geräte 16 bieten äquivalente Dienste). Anwendungen 24, die im Hintergrund auf einem Gerät 16 laufen und nicht über spezielle Privilegien verfügen, werden typischerweise nach einer gewissen Zeit vom Betriebssystem aufgeräumt, um Ressourcen wie Arbeitsspeicher und CPU freizugeben. In diesem Zustand können besagte Anwendungen 24 keinen Code mehr ausführen. Die zweite Anwendung 24 könnte im aufgeräumten Zustand also nicht mehr nach dem ersten Gerät 12 bzw. dem Kommunikationsdienst 22 im Netzwerk (Heimnetz) suchen oder auf Nachrichten von einer ersten Anwendung 20 reagieren. Neben dem erneuten Start der zweiten Anwendung 24 durch den Nutzer können terminierte Aufgaben (z.B. "JobScheduler" unter Android) und "Firebase-Cloud-Messages" (FCM) genutzt werden, um die zweite Anwendung 24 wieder handlungsfähig zu machen. FCMs sind Push-Nachrichten, die über den Firebase-Cloud-Messaging-Service an eine Anwendung auf einem Gerät 16 geschickt werden können.

Die Anwendung 24 kann als Reaktion auf eine FCM dem Anwender eine Benachrichtigung anzeigen (z.B. eine "Notification" als "Icon" in der Statusleiste, ggf. unterstützt durch einen Vibrationsalarm und/oder einen Signalton), über die der Nutzer dann die zweite Anwendung 24 wieder starten kann. Unter Android ist es auch möglich die Anwendung 24 mittels FCM als sogenannten "Foreground"-Service zu starten. Dies ist ein Dienst, der auf einem Gerät 16 im Hintergrund ausgeführt wird, dabei aber für den Nutzer sichtbar ist, z. B. durch ein Icon in der Statusleiste. Der Webservice bietet in Verbindung mit FCM Anwendungen 20 auf einem ersten Gerät 12 die Möglichkeit in nicht erreichbaren zweiten Anwendungen 24 auf einem zweiten Gerät 16 Aktionen zu triggern, die diese wieder erreichbar machen.

### BEZUGSZEICHENLISTE

- 10: System
- 12: erstes Gerät
- 14a: Funkeinheit
- 14b: Router
- 16: zweites Gerät
- 18: drittes Gerät
- 20: erste Anwendung
- 22: Kommunikationsdienst
- 24: zweite Anwendung
- 26: dritte Anwendung
- 28: erster Dienst
- 30: Nachricht
- 32: Nachricht
- 34: Nachricht
- 36: Nachricht
- 40: Nachricht
- 42: Nachricht

## Patentansprüche

1. Verfahren, umfassend:
Aufbauen einer Verbindung zwischen einer ersten Anwendung (20) auf einem ersten Gerät (12) und einem Kommunikationsdienst (22) auf dem ersten Gerät (12) unter Verwendung einer Identifikation, die einer zweiten Anwendung (24) zugeordnet ist;
Aufbauen einer Verbindung zwischen der zweiten Anwendung (24), die auf einem zweiten Gerät (16) ausgeführt wird, und dem Kommunikationsdienst (22) unter Verwendung der Identifikation;
Aufbauen eines Kommunikationskanals zwischen der ersten Anwendung (20) und der zweiten Anwendung (24) über den Kommunikationsdienst (22); und
Empfangen, durch die zweite Anwendung (24), einer ersten Nachricht (36) von der ersten Anwendung (20), wobei die erste Nachricht eine dritte auf dem zweiten Gerät (16) auszuführende Anwendung (26) und/oder einen ersten auf dem zweiten Gerät (16) auszuführenden Dienst (28) der dritten Anwendung (26) benennt.

2. Verfahren nach Anspruch 1, wobei das erste Gerät (12) zur Wiedergabe von Bild- und Tondaten ausgebildet ist.

3. Verfahren nach Anspruch 2, wobei das erste Gerät (12) als HbbTV-fähiges Empfangsgerät ausgebildet ist.

4. Verfahren nach Anspruch 2 oder 3, wobei die erste Anwendung (20) auf dem ersten Gerät (12) einem ersten Rundfunkkanal zugeordnet ist und automatisch gestartet wird oder manuell gestartet werden kann, wenn das erste Gerät (12) Bild- und Tondaten des ersten Rundfunkkanals wiedergibt.

5. Verfahren nach einem der Ansprüche 1 bis 4, wobei die zweite Anwendung (24) überprüft, ob die erste Anwendung (20) autorisiert ist, die Ausführung der dritten Anwendung (26) und/oder des ersten Dienstes (28) anzustoßen, und eine Ausführung der dritten Anwendung (26) und/oder des ersten Dienstes (28) veranlasst, wenn die erste Anwendung (20) autorisiert ist, die Ausführung der dritten Anwendung (26) und/oder des ersten Dienstes (28) anzustoßen.

6. Verfahren nach einem der Ansprüche 1 bis 5, ferner umfassend:
Beenden der ersten Anwendung (20) und Ausführen einer vierten Anwendung auf dem ersten Gerät (12);
Aufbauen eines Kommunikationskanals zwischen der vierten Anwendung und der zweiten Anwendung (24) über den Kommunikationsdienst (22) unter Verwendung der Identifikation; und
Empfangen, durch die zweite Anwendung (24), einer zweiten Nachricht von der vierten Anwendung, wobei die zweite Nachricht eine fünfte auf dem zweiten Gerät (16) auszuführende Anwendung und/oder einen zweiten auf dem zweiten Gerät (16) auszuführenden Dienst der fünften Anwendung benennt.

7. Verfahren nach einem der Ansprüche 1 bis 6, ferner umfassend:
Verbreiten einer dritten Nachricht (40) durch die auf dem zweiten Gerät (16) ausgeführte zweite Anwendung (24); und
Beantworten der dritten Nachricht (40), durch das erste Gerät (12), wobei die Antwort (42) die Adresse des Kommunikationsdienstes (22) auf dem ersten Gerät (12) umfasst.

8. Verfahren nach einem der Ansprüche 1 bis 7, wobei die auf dem zweiten Gerät (16) ausgeführte zweite Anwendung (24) einen Aufbauversuch hinsichtlich des Kommunikationskanals solange wiederholt bis der Kommunikationskanal aufgebaut ist.

9. Verfahren nach einem der Ansprüche 1 bis 8, wobei die Identifikation einer Instanz der zweiten Anwendung (24) auf dem zweiten Gerät (16) zugeordnet ist.

10. Verfahren nach Anspruch 9, wobei die Identifikation auf dem ersten Gerät (12) durch die erste Anwendung (20) persistent gespeichert wird und ein Zugriff auf die gespeicherte Identifikation auf Anwendungen begrenzt ist, die aus derselben Quelle wie die erste Anwendung (20) stammen.

11. Verfahren nach Anspruch 9 oder 10, wobei die zweite Anwendung (24) die Identifikation an die erste Anwendung (20) überträgt, die diese auf dem ersten Gerät (12) persistent speichert.

12. Verfahren nach Anspruch 11, wobei die Identifikation einer auf dem ersten Gerät (12) ausgeführten fünften Anwendung, die aus einer anderen Quelle als die erste Anwendung stammt, bereitgestellt und von der fünften Anwendung auf dem ersten Gerät (12) persistent gespeichert wird.

13. Verfahren nach Anspruch 12, wobei die erste Anwendung (20) der fünften Anwendung die Identifikation weiterleitet und die fünfte Anwendung die Identifikation persistent auf dem ersten Gerät (12) speichert.

14. Verfahren nach Anspruch 9 oder 10, wobei die zweite Anwendung (24) die Identifikation und Quellen weiterer Anwendungen an eine sechste Anwendung auf dem ersten Gerät (12) überträgt, welche die weiteren Anwendungen ausführt und mit der Identifikation versorgt, wobei die weiteren Anwendungen die Identifikation auf dem ersten Gerät (12) speichern und ihrer Quelle zuordnen.

15. Verfahren nach Anspruch 9 oder 10, wobei die Identifikation von einer Anwendung auf dem ersten Gerät (12) aus einer Benutzereingabe abgeleitet und persistent gespeichert wird.

16. Verfahren nach einem der Ansprüche 9 bis 15, wobei die erste Anwendung (20) auf dem ersten Gerät (12) der zweiten Anwendung (24) auf dem zweiten Gerät (16) mittels der Identifikation über einen externen Kommunikationsdienst eine vierte Nachricht sendet, die die dritte Anwendung und/oder den ersten Dienst, der durch die dritte Anwendung bereitgestellt wird, benennt.

17. Verfahren nach einem der Ansprüche 9 bis 15, wobei die erste Anwendung (20) auf dem ersten Gerät (12) der zweiten Anwendung (24) auf dem zweiten Gerät (16) über einen externen Kommunikationsdienst unter Verwendung der Identifikation eine fünfte Nachricht sendet, welche die zweite Anwendung (24) dazu anregt, die Verbindung zwischen der zweiten Anwendung (24) und dem Kommunikationsdienst (22) aufzubauen.

18. Verfahren nach einem der Ansprüche 1 bis 17, wobei die dritte auf dem zweiten Gerät (16) auszuführende Anwendung (26) und/oder der erste auf dem zweiten Gerät (16) auszuführende Dienst (28) in Reaktion auf die erste Nachricht (36) oder in Reaktion auf eine Bestätigungseingabe sofort oder zu einem späteren Zeitpunkt ausgeführt werden.

19. Verfahren nach einem der Ansprüche 1 bis 18, wobei die dritte Anwendung (26) eine mit der Wiedergabe auf dem ersten Gerät (12) koordinierte Benutzerschnittstelle bereitstellt, wobei die Koordination mittels eines zwischen der ersten Anwendung (20) und der dritten Anwendung (26) aufgebauten Kommunikationskanals erfolgt.
